# EUROPEAN PATENT APPLICATION

(11) **EP 1 870 815 A1**
(43) Date of publication of application: **26.12.2007**
(21) Application number: 07252524.9
(22) Date of filing: 21.06.2007
(51) Int. Cl.: G06F 12/14, G06F 12/08

(54) **Access controller and access control method**

(30) Priority: 23.06.2006 JP 2006173906
(71) Applicant: Kabushiki Kaisha Toshiba, Minato-ku, Tokyo 105-8001 (JP)
(72) Inventor: Kuninobu, Shigeta, Toshiba Corporation c/o Intellectual Property Division, Tokyo 105-8001 (JP); Ohta, Akinori, Toshiba Corporation c/oIntellectual Property Division, Tokyo 105-8001 (JP); Hiromasa, Shin, Toshiba Corporation, Intellectual Property Division, Tokyo 105-8001 (JP)
(74) Representative: Granleese, Rhian Jane

(57) **Abstract**

An access controller (13) includes an access control cache (18) configured to store access control data that associates an address range with an access permission. The access control cache (18) reads the access control data by selecting a cache line. A line decision device (14) receives an object code of an assembler instruction to be executed by a CPU (11)and decides the cache line to be selected for accessing the access control cache (18) based on the object code. A cache determination device (15) determines a cache hit in a case where a memory address to be accessed by the assembler instruction is included in the address range, and outputs corresponding access permission.

## Description

The invention relates to a device and method, which contribute to speeding up of an access control cache.

When referring to information of access control data for each program instruction, the execution speed of the program becomes low. Hence, some pieces of information of the access control data are allocated on an access control cache comprising a high-speed memory. The access control data is referred to only when access control information for a memory area to be accessed by a program instruction is not allocated on the access control cache (cache miss).

"Mondrian Memory Protection", Emmett Witchel, Josh Cates, and Krste Asanovic, Tenth International Conference on Architectural Support For Programming Languages and Operating Systems (ASPLOS-X), San Jose, CA, October 2002 describes a Mondrian Memory Protection (MMP) scheme. As many access control cache areas are prepared as the number of general-purpose registers held by a program execution environment, a register number which stores a memory address to be accessed by a program instruction is used as a key, and a cache area corresponding to the key is referred to.

It is an object of the invention to provide an access controller and an access control method, which can assure a higher cache hit rate even when cache areas equal to or fewer than the MMP scheme are prepared.

An access controller according to one aspect of the invention comprises an access control cache configured to store access control data that associates address range with an access permission. The access control cache reads the access control data by selecting a cache line. A line decision device receives an object code of an assembler instruction to be executed by a CPU and decides the cache line to be selected for accessing the access control cache based on the object code. A cache determination device determines a cache hit in a case where a memory address to be accessed by the assembler instruction is included in the address range, and outputs corresponding access permission.

The invention can be more fully understood from the following detailed description when taken in conjunction with the accompanying drawings, in which:
FIG. 1 is a block diagram showing an access control cache device according to one embodiment;
FIG. 2 is a block diagram showing a practical example of a cache line decision device shown in FIG. 1;
FIG. 3 is a block diagram showing another practical example of the cache line decision device shown in FIG. 1;
FIG. 4 is a block diagram showing another practical example of the cache line decision device shown in FIG. 1;
FIG. 5 is a block diagram showing another practical example of the cache line decision device shown in FIG. 1;
FIG. 6 shows the configuration of access control data;
FIG. 7 is a block diagram for explaining the MMP scheme; and
FIG. 8 is a flowchart showing the procedure of the operation of the access control cache device.

In order to increase the cache hit rate in an access control cache scheme, it is important to simply extract information (key) required to predict a memory area to be accessed by a program instruction, and to use that information in the decision of a cache area to be referred to. The use of a register number that stores a memory address to be accessed by a program instruction as a key assumes the presence of correlation between the register number that stores the memory address to be accessed by the program instruction and a memory area to be actually accessed.

By contrast, an access control cache device according to this embodiment uses, as a key, information based on an assembler instruction to be executed by a program, in place of the general-purpose register number, so as to assure a higher cache hit rate. The reason why it is effective to use a key based on an assembler instruction in prediction of a memory area to be accessed by a program instruction is as follows. That is, assembler instructions can be generally classified into three types: an instruction to write in a memory (Write instruction), an instruction to read out from a memory (Read instruction), and an instruction to change an execution instruction address (Execute instruction). On the other hand, a compiler or linker which compiles a program classifies a memory space into an area that permits only read access, a readable/writable area, an area that stores an execution instruction, and the like and allocates programs. Therefore, there is a correlation between assembler instructions to be executed, and memory areas to be actually accessed.

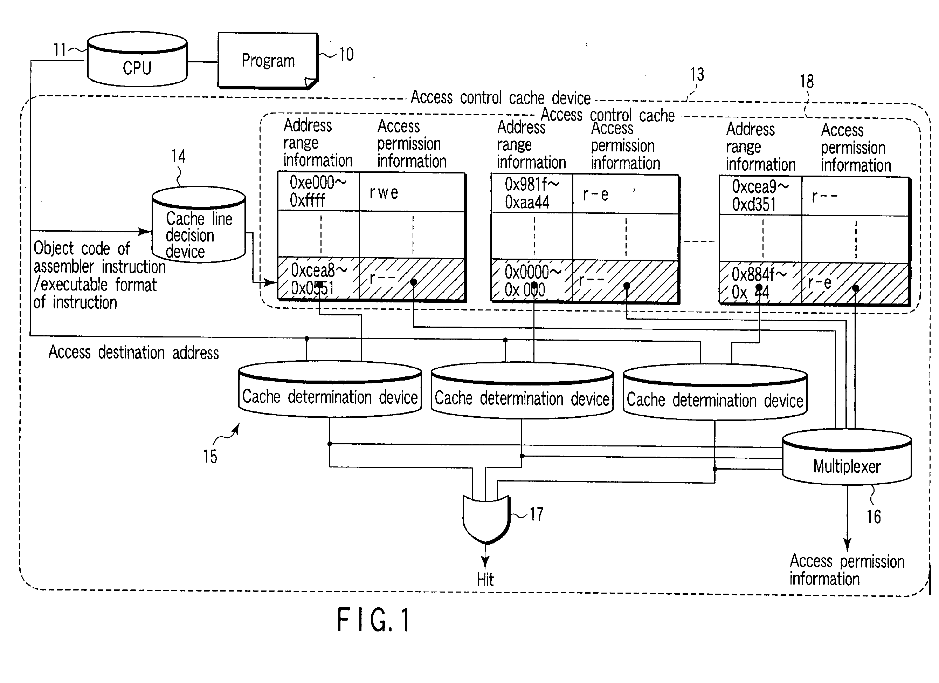

As shown in FIG. 1, an access control cache device 13 according to one embodiment is connected to a CPU (central processing unit) 11 which executes a program 10 read out from a memory (not shown), and controls an access control cache 18 which comprises, e.g., a high-speed SRAM or the like.

Upon reception of an assembler instruction or an executable format of an assembler instruction to be executed by the CPU 11 (Write instruction, Read instruction, or Execute instruction), a cache line decision device 14 decides a cache line to be referred to of the access control cache 18 based on input information. Upon deciding the cache line in the access control cache 18, pieces of address range information for an associativity value are input to cache determination devices 15. Note that "associativity" means a value that represents how many cache determination processes of intra-cache information can be done at the same time. For example, if the associativity value = "3", three cache determination devices 15 are required. Upon parallelly operating the three cache determination devices 15, three cache determination processes are executed parallelly.

Each cache determination device 15 determines if a memory address to be accessed by the assembler instruction is included in the input address range information. That is, if there is address range information including the memory address to be accessed, access permission information corresponding to that address range information is output from a multiplexer 16. When a cache hit occurs in one of the plurality of cache determination devices 15 arranged in correspondence with the associativity value, an OR gate 17 outputs a signal indicating the occurrence of a cache hit.

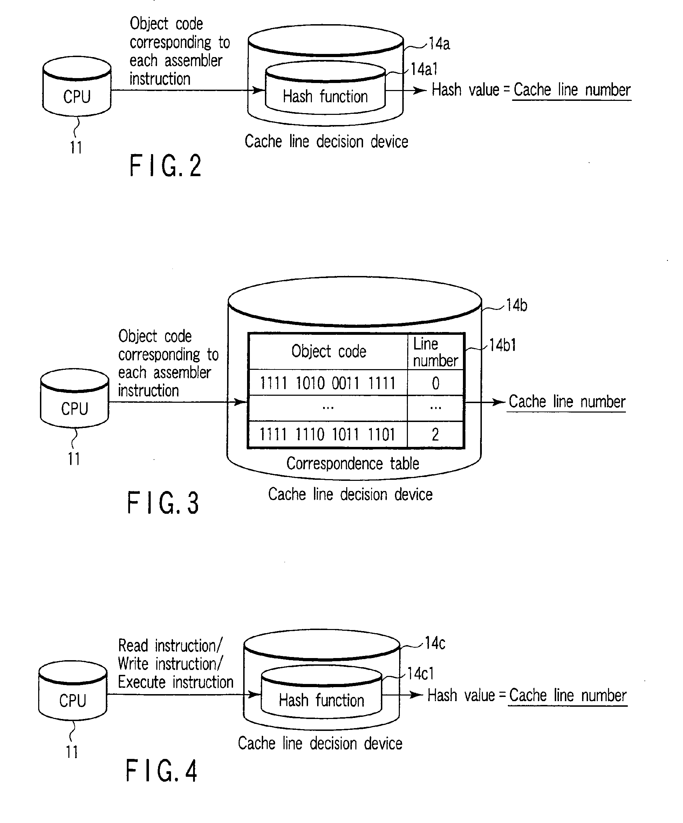

The cache line decision device 14 receives an object code of an assembler instruction/an executable format of an instruction for each assembler instruction of the program to be executed by the CPU 11, and decides a cache line in the access control cache 18 based on the received information. Some practical examples of the arrangements of this cache line decision device 14 will be described below with reference to FIGS. 2 to 5.

A cache line decision device 14a shown in FIG. 2 receives an object code corresponding to an assembler instruction to be executed by the CPU 11 as an input. The input object code is input to a Hash function 14a1 inside the cache line decision device 14a. The cache line decision device 14a outputs a Hash value from the Hash function 14a1. This Hash value is used as a cache line number upon selecting a cache line in the access control cache 18. Note that the relationship between the input and output of the Hash function 14a1 need not always be one-to-one correspondence. That is, one cache line number can be selected based on a plurality of object codes.

A cache line decision device 14b shown in FIG. 3 receives an object code corresponding to an assembler instruction to be executed by the CPU 11 as an input as in the cache line decision device 14a shown in FIG. 2. The cache line decision device 14b searches a correspondence table 14b1 using the input object code as a key and selects a corresponding cache line number.

A cache line decision device 14c shown in FIG. 4 receives, as an input, information (instruction type identification information) indicating a type of assembler instruction (e.g., one of three types: Read instruction, Write instruction, and Execute instruction) to be executed by the CPU 11. The Read instruction is an instruction that the assembler instruction reads data from a memory. The Write instruction is an instruction that the assembler instruction writes data in a memory. The Execute instruction is an instruction to change an execution instruction address.

The input instruction type is input to a Hash function 14c1 in the cache line decision device 14c. The cache line decision device 14c outputs a Hash value from the Hash function 14c1. This Hash value is used as a cache line number upon selecting a cache line in the access control cache 18. Note that the relationship between the input and output of the Hash function need not always be one-to-one correspondence. That is, one cache line number can be selected based on a plurality of instruction types.

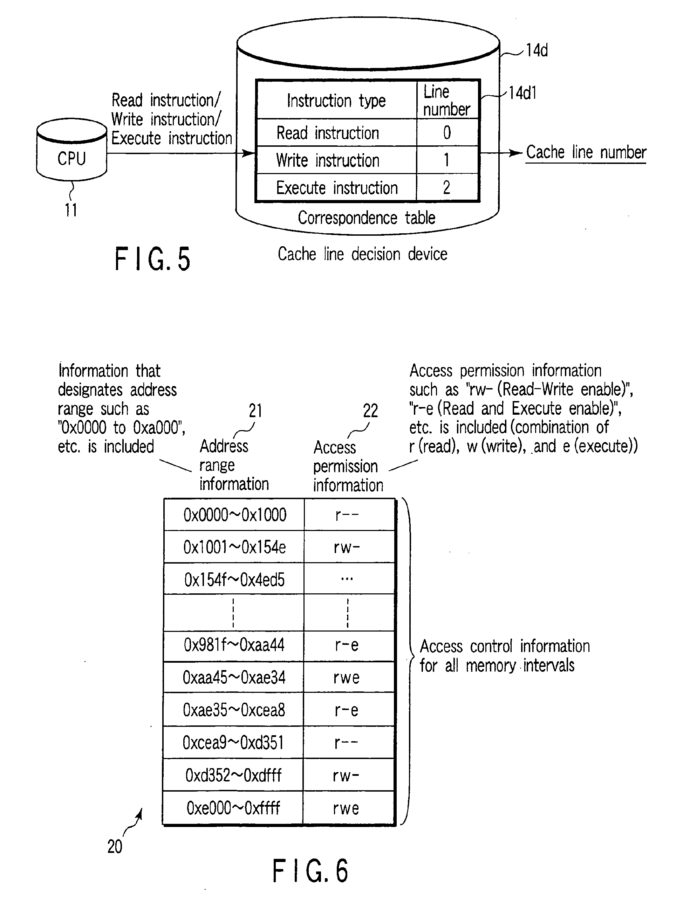

A cache line instruction device 14d shown in FIG. 5 receives, as an input, information (instruction type identification information) indicating a type of assembler instruction (e.g., one of three types: Read instruction, Write instruction, and Execute instruction) to be executed by the CPU 11 as in the cache line decision device 14c shown in FIG. 4. The cache line decision device 14d searches a correspondence table 14d1 inside the cache line decision device 14d using the input instruction type as a key and selects a corresponding cache line number.

As shown in FIG. 6, access control data 20 stored in the access control cache 18 describes access control information for all memory intervals. Each access control information includes address range information 21 and access permission information 22.

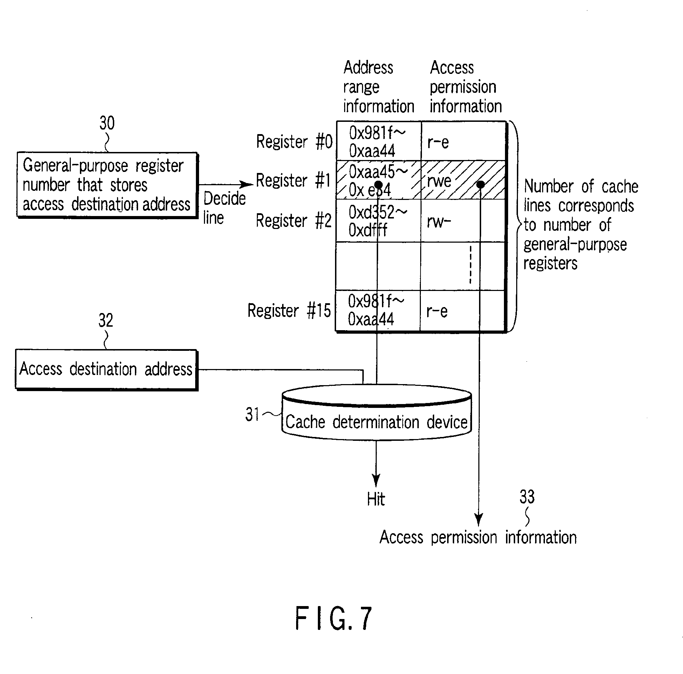

For the purpose of comparison with this embodiment, the aforementioned MMP scheme will be described below with reference to FIG. 7. The MMP scheme decides a cache area to be referred to using a number 30 of a general-purpose register that stores an access destination address as a key. Upon reception of an access destination address 32, a cache determination device 31 of the MMP scheme obtains access permission information 33 for an address range corresponding to the general-purpose register number (register #1 in this example) that stores the access destination address.

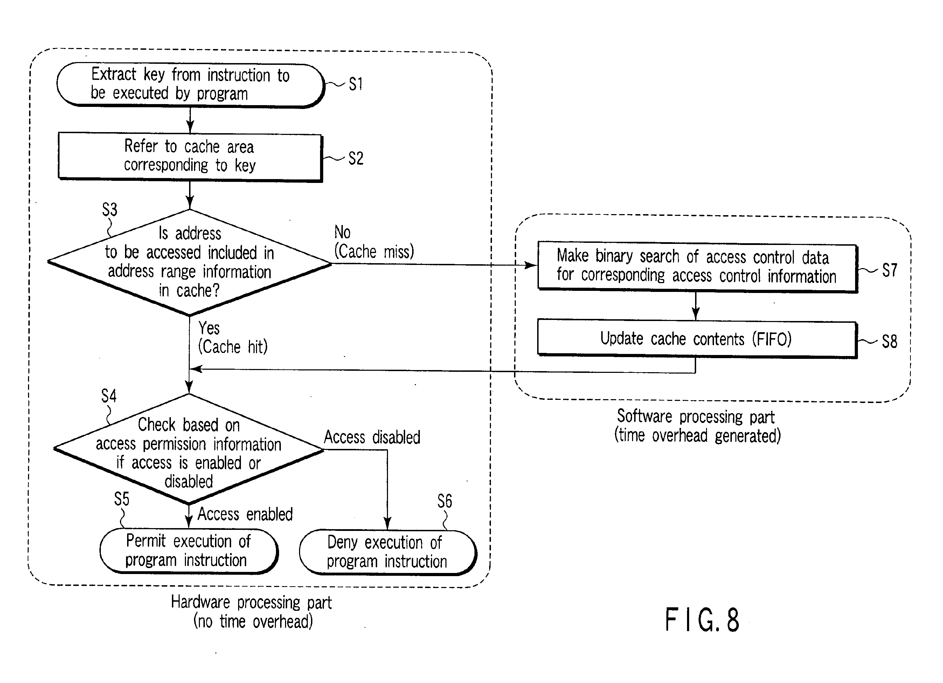

Such MMP scheme and this embodiment are compared by measuring how many cache misses occur in their implementation examples on an instruction set simulator. A description will be given along the procedure of the operation of the access control cache device according to this embodiment. In the operation shown in FIG. 8, an overhead is generated in the program execution speed only when a cache miss that shifts to software processing has occurred. Hence, the overhead decreases in proportion to a decrease in number of cache misses.

(Step S1) The access control cache device 13 extracts a key from an instruction to be executed by the program 10. The aforementioned MMP scheme uses the general-purpose address number that stores an access destination address as a key. By contrast, this embodiment extracts a key from an assembler instruction to be executed by the CPU 11. More specifically, the device 13 uses an object code corresponding to the assembler instruction or the type of assembler instruction as a key.

(Step S2) A cache area corresponding to the key is referred to. The MMP scheme refers to a cache area corresponding to the general-purpose register number as the key. Since a program execution environment of this embodiment includes 16 general-purpose registers, the total cache area size corresponds to 16 pieces of access control information.

On the other hand, in this embodiment, the cache line decision device 14 decides a cache line of a cache to be referred to based on the object code or executable format of the assembler instruction to be executed using the Hash function, correspondence table, or the like (see FIGS. 2 to 5 for the examples of the arrangements of the cache line decision device 14). In this embodiment, the cache area size corresponds to, e.g., eight or 12 pieces of access control information.

(Step S3) The cache determination device 15 determines if the address to be accessed is included in address range information in the access control cache 18. If_the address to be accessed is included, a cache hit occurs; otherwise, a cache miss occurs.

(Step S4) If the cache hit occurs in step S3, it is checked based on the contents of corresponding access permission information in the access control cache 18 whether to enable or disable access.

(Step S5) If it is determined in step S4 that access is enabled, instruction execution is continued.

(Step S6) If it is determined in step S4 that access is disabled, instruction execution is denied (not permitted).

(Step S7) If a cache hit does not occur in step S3, the process advances to software processing to make a binary search of the access control data 20 for corresponding access control information.

(Step S8) The access control information found in step S7 is stored in the access control cache 18 (to update the cache). In this case, the oldest access control information in the access control cache 18 is deleted from the access control cache 18 (FIFO). In the software processing in steps S7 and S8, a time overhead is generated to lower the execution speed.

The programs 10 which are to undergo access control and the number of memory intervals included in the access control data 20 created based on these programs 10 are as follows. The address range information 21 in the access control data 20 includes intervals when a linker classifies the memory space into an area that permits only read access, a readable/writable area, an area that stores an execution instruction, and the like as a default setting. Also, the access permission information 22 in the access control data 20 sets "r--", "rw-", "r-e", and the like in correspondence with the area that permits only read access, the readable/writable area, and the area that stores an execution instruction (see FIG. 6).

As the programs 10 which are to undergo access control, for example, the following two programs are used.
(1) A character string inspection algorithm (a program for searching a character string for a designated character string)
(2) A Dijkstra algorithm (a program for searching a given graph for a shortest route)

These programs are included in an embedded benchmark suite called MiBench released by the University of Michigan.

The number of memory intervals included in the access control data 20 is 19 for the character string inspection algorithm and 23 for the Dijkstra algorithm.

As for the MMP scheme, the instruction set simulator used currently has 16 general-purpose registers. Hence, a cache area size for 16 pieces of access control information is prepared so as to have one-to-one correspondence with the general-purpose address numbers each of which stores an access destination address as a key. For example, if the general-purpose address number that stores an access destination address is No. 1, a first cache area is referred to (see FIG. 7).

This embodiment selects a cache line in the cache using the executable format (Read instruction, Write instruction, and Execute instruction) of the assembler instruction. Assume that the associativity value is 4. As described above, "associativity" means a value that represents how many cache determination processes of intra-cache information can be done at the same time. The cache determination devices 15 shown in FIG. 1 are required as many as the associativity value. In this embodiment, the following conditions 1 and 2 are given.

(Condition 1): Two cache lines in the cache are prepared, and the cache line decision device 14 has a Hash function or correspondence table to select cache line 1 if the executable format of the assembler instruction is the Read or Write instruction or to select cache line 2 if it is the Execute instruction (since the number of cache lines is 2 and the associativity value is 4, the cache size corresponds to eight pieces of access control information).

(Condition 2): Three cache lines in the cache are prepared, and the cache line decision device 14 has a Hash function or correspondence table to select cache line 1 if the executable format of the assembler instruction is the Read instruction, to select cache line 2 if it is the Write instruction, or to select cache line 3 if it is the Execute instruction (since the number of cache lines is 3 and the associativity value is 4, the cache size corresponds to 12 pieces of access control information).

The comparison results are as follows.

### (1) Comparison result in character string inspection algorithm

In the MMP method, the number of cache miss times was 20,639. By contrast, in this embodiment (condition 1), the number of cache miss times was 3,695, which is -82.1% against the MMP scheme. Also, in this embodiment (condition 2), the number of cache miss times was 2,872, which is -86.1% against the MMP scheme.

### (2) Comparison result in Dijkstra algorithm

In the MMP method, the number of cache miss times was 230,654. By contrast, in this embodiment (condition 1), the number of cache miss times was 148,915, which is -35.4% against the MMP scheme. Also, in this embodiment (condition 2), the number of cache miss times was 88,666, which is -61.6% against the MMP scheme.

Based on these results, this embodiment can expect an improvement in cache hit rate of about 35% to 86% with a cache size smaller than the MMP scheme. Therefore, the time overhead due to memory access control can be reduced.

## Claims

1. An access controller (13) **characterized by** comprising:
an access control cache (18) configured to store access control data that associates an address range with an access permission, the access control cache (18) reading the access control data by selecting a cache line;
a line decision device (14) configured to receive an object code of an assembler instruction to be executed by a CPU (11) and to decide the cache line to be selected for accessing the access control cache (18) based on the object code; and
a cache determination device (15) configured to determine a cache hit in case that a memory address to be accessed by the assembler instruction is included in the address range, and to output corresponding access permission.

2. The access controller (13) according to claim 1, **characterized in that** the line decision device (14) has a Hash function, and decides as the cache line a Hash value output from the Hash function upon input of the object code.

3. The access controller (13) according to claim 1, **characterized in that** the line decision device (14) has a correspondence table which stores a plurality of object codes and a plurality of cache lines of the access control cache (18) in correspondence with each other.

4. An access controller (13) **characterized by** comprising:
an access control cache (18) configured to store access control data that associates an address range with an access permission, the access control cache (18) reading the access control data by selecting the cache line;
a line decision device (14) configured to decide the cache line depending on whether an assembler instruction to be executed by a CPU (11) is an instruction of any of types including a Read instruction that reads data from a memory, a Write instruction that writes data in the memory, and an Execute instruction that changes an execution instruction address; and
a cache determination device (15) configured to determine a cache hit in a case where a memory address to be accessed by the assembler instruction is included in the address range, and to output corresponding access permission.

5. The access controller (13) according to claim 4, **characterized in that** the line decision device (14) has a Hash function, and decides as the cache line a Hash value output from the Hash function upon input of a value of an identifier indicating the type of instruction.

6. The access controller (13) according to claim 4, **characterized in that** the line decision device (14) has a correspondence table which stores the types of instructions and a plurality of cache lines of the access control cache (18) in correspondence with each other.

7. An access control method using an access control cache (18) configured to store access control data that associates an address range with an access permission, and is accessible for each cache line, **characterized by** comprising:
receiving an object code of an assembler instruction to be executed by a CPU (11) and deciding a cache line to be selected for accessing the access control cache (18) based on the object code;
determining a cache hit in a case where the cache line in the access control cache (18) is accessed and a memory address to be accessed by the assembler instruction is included in the address range, and outputting corresponding access permission.

8. The method according to claim 7, **characterized by** further comprising deciding as the cache line a Hash value output from a Hash function upon input of the object code.

9. The method according to claim 7, **characterized by** further comprising storing in a correspondence table a plurality of object codes and a plurality of cache lines of the access control cache (18) in correspondence with each other.

10. A cache determination method using an access control cache (18) configured to store access control data that associates an address range with an access permission, and is accessible for each cache line, **characterized by** comprising:
deciding the cache line depending on whether an assembler instruction to be executed by a CPU (11) is an instruction of any of types including a Read instruction that reads data from a memory, a Write instruction that writes data in the memory, and an Execute instruction that changes an execution instruction address; and
determining a cache hit in a case where a memory address to be accessed by the assembler instruction is included in the address range, and outputting corresponding access permission.

11. The method according to claim 10, **characterized by** further comprising deciding as the cache line a Hash value output from a Hash function upon input of the object code.

12. The method according to claim 10, **characterized by** further comprising storing in a correspondence table a plurality of object codes and a plurality of cache lines of the access control cache (18) in correspondence with each other.
